(19)

Europäisches
Patentamt
European
Patent Office
Office européen
des brevets

(11)　**EP 4 446 824 A1**

(12)　**EUROPEAN PATENT APPLICATION**

(43) Date of publication:
**16.10.2024　Bulletin 2024/42**

(21) Application number: **23167807.9**

(22) Date of filing: **13.04.2023**

(51) International Patent Classification (IPC):
**G05B 15/02** (2006.01)　　**F24F 11/63** (2018.01)

(52) Cooperative Patent Classification (CPC):
**G05B 15/02; F24F 11/63; F24F 11/64;**
G05B 2219/2614

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Cola, Fabrizio
534635 Singapore (SG)**
• **Tanyildiz, Baris
574036 Singapore (SG)**

(54)　**SYSTEM AND METHOD FOR TRAINING A CONTROL STRATEGY FOR A HEATING,
VENTILATION, AND AIR-CONDITIONING (HVAC) SYSTEM**

(57)　Aspects concern a method for training a control strategy for a heating, ventilation, and air-conditioning, HVAC, system, comprising applying control actions to a set of HVAC units comprising a plurality of HVAC units, gathering feedback from each HVAC unit of the set of HVAC units regarding results of the control actions, training a first HVAC control strategy using reinforcement learning, wherein rewards are at least partially determined based on the feedback and sub-dividing the set of HVAC units into different sub-sets of HVAC units and, for each sub-set, refining the first HVAC control strategy to a respective second HVAC control strategy for the sub-set using reinforcement learning, wherein rewards are at least partially determined based on the feedback gathered for HVAC units of the sub-set.

**FIG 2**

$$Q^{\pi}(s,a) = \mathbb{E}_{\pi}\left[\sum_{k=0}^{\infty} \gamma^{k} r_{t+k+1} \mid s_t = s, a_t = a\right]$$

EP 4 446 824 A1

**Description**

**TECHNICAL FIELD**

Various aspects of this disclosure relate to systems and methods for training a control strategy for a heating, ventilation, and air-conditioning (HVAC) system.

**BACKGROUND**

Machine learning, such as Reinforcement learning (RL), has been applied to the control of heating, ventilation, and air-conditioning (HVAC) systems and units, i.e. to learn a control strategy for a HVAC system.

For example, RL has been used in controllers to improve the operation of HVAC in either commercial or residential buildings. Current RL applications typically formulate the RL as an optimization problem with a single target to be achieved. Such targets may include electrical energy savings, temperature, and Indoor Air Quality ("IAQ") targets. Each target may be achieved through an incentive or reward system which may be used to incentive solutions that are closer to the target and penalize solutions that are away from the target.

In many applications, strategies to speed up the learning process are presented, but the relatively long training time for RL may be a drawback, which may cause intermediate sub-optimal solutions that may not be acceptable to a user (e.g. when the RL algorithm explores possible options). In addition, the training dataset, which sometimes includes synthetic data, that is used for training may not be of an acceptable quality that reflects real-world operating conditions.

Data collected over time may also be used to train a separate ("surrogate") model that describes the system dynamics. This is the used to generate "synthetic" data to train the control strategy. As the simulation is not bound by real time, training data can be generated faster and this can reduce the total training time of the RL algorithm. However, this approach adds uncertainty to the learning task, as accuracy of the surrogate model will also require time to reach a satisfactory level.

Transfer learning may be used to choose an existing user profile to assign to a new user for faster onboarding. This may solve the issue of initial discomfort, but when it comes to the target of the control strategy (e.g. energy saving, comfort), the profile may be limited in scope, as it is only based on other user's behaviour but did not explore all possible options to optimize the targets.

Therefore, efficient approaches for training a control strategy are desirable which lead to low discomfort of individual users.

**SUMMARY**

Various embodiments concern a method for training a control strategy for a heating, ventilation, and air-conditioning, HVAC, system, comprising applying control actions to a set of HVAC units comprising a plurality of HVAC units, gathering feedback from each HVAC unit of the set of HVAC units regarding results of the control actions, training a first HVAC control strategy using reinforcement learning, wherein rewards are at least partially determined based on the feedback and sub-dividing the set of HVAC units into different sub-sets of HVAC units and, for each sub-set, refining the first HVAC control strategy to a respective second HVAC control strategy for the sub-set using reinforcement learning, wherein rewards are at least partially determined based on the feedback gathered for HVAC units of the sub-set.

According to various embodiments, the method comprises training a hierarchy of HVAC control strategies starting from the first HVAC control strategy by, for each level of the hierarchy below the first HVAC control strategy, sub-dividing the set of HVAC units for which a HVAC control strategy of the previous level of the hierarchy was trained into different sub-sets of HVAC units and, for each sub-set, refining the HVAC control strategy of the previous level to a HVAC control strategy for the level of the hierarchy using reinforcement learning, wherein rewards are at least partially determined based on the feedback gathered for HVAC units of the sub-set.

According to various embodiments, the sub-sets of the lowest level of the hierarchy each comprise a single user or a single activity period of a respective user.

According to various embodiments, the method comprises applying, for each sub-set, further control actions to the HVAC units of the sub-set, gathering further feedback from each HVAC unit of the sub-set regarding results of the further control actions, wherein rewards for the refining are at least partially determined based on the further feedback

According to various embodiments, rewards for training of the first HVAC control strategy or for the refining are at least partially determined based on user feedback about user comfort regarding room temperature.

According to various embodiments, the user feedback includes user feedback for each of a plurality of users which is, for each of the plurality of users, determined based on whether the user has applied a user control action to a HVAC unit of the user.

According to various embodiments, the user control action is one or more of switching a heating on, switching a heating off, switching a fan on and switching a fan off.

According to various embodiments, the user control action to the HVAC unit of the user gives a negative reward to a control action which is overruled by the user control action.

According to various embodiments, the method comprises performing the training and the refining using federated learning comprising merging control strategy updates determined for different HVAC unit selections among the plurality of HVAC units.

According to various embodiments, rewards for training of the first HVAC control strategy or for the refining are at least partially determined based on output of a user comfort model trained to predict a user comfort depending on room temperature.

According to various embodiments, the method comprises training the user comfort model in parallel with the training of the first control strategy or the refinement or both.

According to various embodiments, a method for controlling a heating, ventilation, and air-conditioning, HVAC, system is provided comprising training a control strategy according to any one of the embodiments described above and controlling a HVAC system according to the control strategy.

According to various embodiments, controlling the HVAC system according to the control strategy comprises transferring the trained control strategy to the HVAC system.

According to various embodiments, a data processing system (e.g. one or more computers) is provided configured to perform a method according to any one of the embodiments described above.

According to various embodiments, a computer program is provided comprising instructions which, when executed by a computer, makes the computer perform a method according to any one of the embodiments described above.

According to various embodiments, a computer-readable medium is provided comprising instructions which, when executed by a computer, makes the computer perform a method according to any one of the embodiments described above.

## BRIEF DESCRIPTION OF THE DRAWINGS

The disclosure will be better understood with reference to the detailed description when considered in conjunction with the non-limiting examples and the accompanying drawings, in which:

- FIG. 1 illustrates data collection from data sources of a residential air conditioning (RAC) system and the processing of the data.
- FIG. 2 illustrates an RL (reinforcement learning) training process for a control policy for a RAC system.
- FIG. 3 illustrates federated learning of a control policy according to an embodiment.
- FIG. 4 illustrates the refinement of a common control policy over multiple refinement levels.
- FIG. 5 illustrates thermal comfort model training.
- FIG. 6 illustrates a process for training a user-specific thermal comfort model.
- FIG. 7 shows a flow diagram illustrating a method for training a control strategy for a heating, ventilation, and air-conditioning (HVAC) system.

## DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the enclosure assemblies, vehicles, or methods are analogously valid for the other enclosure assemblies, vehicles, or methods. Similarly, embodiments described in the context of an enclosure assembly are analogously valid for a vehicle or a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

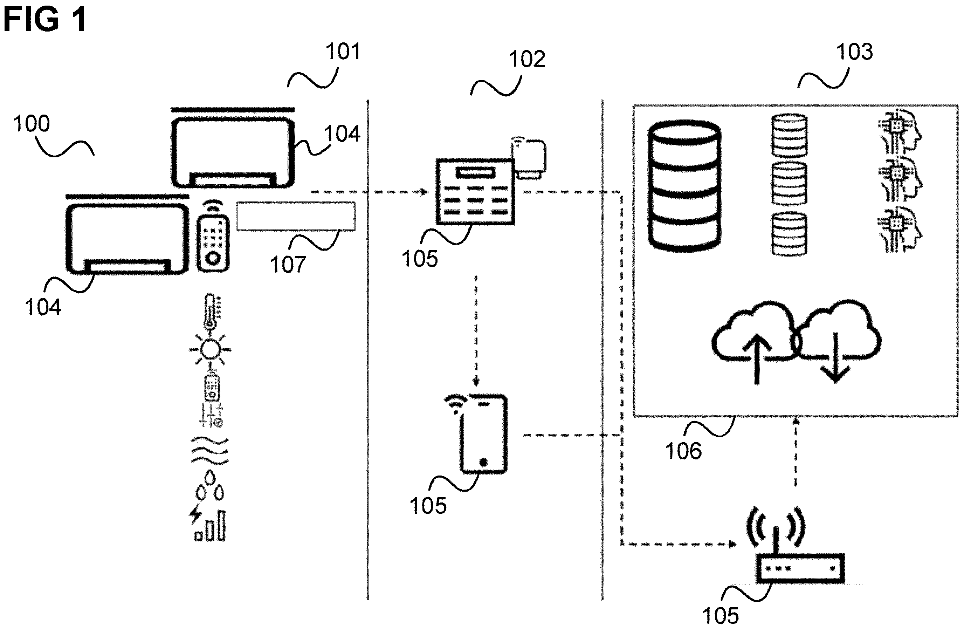

FIG. 1 illustrates data collection 102 from data sources 101 of a residential air conditioning (RAC) system (or heating, ventilation, and air-conditioning (HVAC) system) 100 and the processing 103 of the data. The RAC system 100 may be (but is not limited to) a single-split system, a multi-split system or a mini-VRF(Variable Refrigerant Flow) system. The RAC system 100 can perform cooling and heating, and change temperature, fan settings as well as operation modes such as normal mode, ventilation mode, dry (dehumidification mode) and silent mode. It is assumed that the RAC 100 system comprises a plurality of RAC units (in particular heating, ventilation, and air-conditioning (HVAC) units) 104 which may in particular act as data sources 101.

For training a control strategy for the RAC system 100, a series of data points is collected from the RAC system 100 from the data sources 101, in particular internal sensors 107 of the HVAC units 101. These data points may include room temperature and humidity, outdoor temperature, temperature set point, internal cycle temperatures such as indoor coil temperature and outdoor coil temperature, internal cycle refrigerant pressures, compressor speed, fan speed, operating mode, power consumption. In some cases, a power metering device may be available and share current consumption; in other cases, power consumption may be estimated using the other cycle-level data or using nominal data from the product specifications. Additionally, metadata of the RAC system 100 may also be collected, such as RAC model, size, and location.

The data is fed to a RAC connectivity system (comprising one or more connectivity devices 105) that can read data from and transmit it between the RAC system and a cloud-based server 106. This connectivity device system may be implemented by a centralized controller device connected to a domestic router or may be a Wi-Fi dongle connected to a home network (to which the RAC system 100 or parts of it is connected) such that the data is collected via the centralized controller device or Wi-Fi dongle and sent to the cloud-based server 106 with a pre-defined frequency, such as every minute, every 10 minutes, or every hour. The data may for example also be forwarded via a smartphone app and/or a corresponding API of the server 106.

Using the collected data, the cloud-based server 106 (or another training device) may then train a control policy for the RAC system 100. One approach for learning such a control strategy is reinforcement learning.

Reinforcement Learning is a technique to learn an optimal control policy for a system without having an exact description of the system behaviour (or "model"). It follows an approach similar to trial and error. Firstly, the end goal of the controller is defined by means of a reward function; the scope of the RL algorithm will then be to maximize this reward, which translates to achieving said goal. To do so, RL is fed a set of observations, which consists in a set of data points (which need not be exhaustive) that describes the state of the system.

In the present use case of training a control policy for a RAC system 100, a controller (or agent) which is supposed the control strategy using reinforcement learning (e.g. implemented by the server 106), has a set of available control actions it can perform on the RAC system 100 (e.g. change fan speed, temperature set point) etc. During training, the controller (executing a RL algorithm to learn the control strategy) reads (in each of multiple iterations) an observation and chooses an action to perform. This may be the best action available to its knowledge (in terms of the expected reward), or a random one to explore potentially better alternatives. This process is iterated until the best action for each observation has been finalized, meaning an optimal control policy has been found.

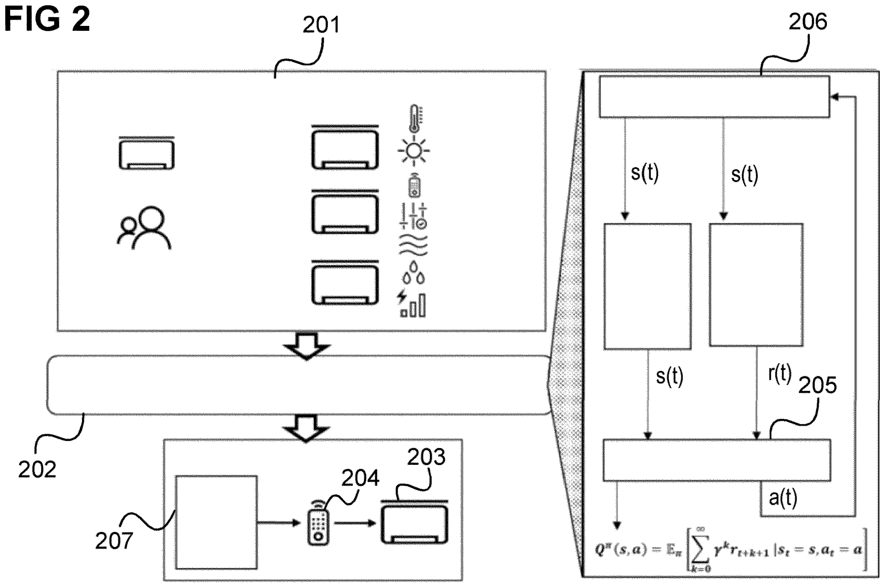

FIG. 2 illustrates an RL training process for a control policy for a RAC system.

Data from a data lake 201, e.g. acquired from the RAC units 104 as described above, is the training data input for a RL algorithm 202, e.g. performed by the server 106, for learning the control policy. When the control policy has been trained, it may be used to efficiently select actions 207 for the RAC units 203 (e.g. communicated to each RAC unit 203 via a respective connectivity device 204).

The RL algorithm 202 performs an iterative process where an agent 205 interacts with an environment 206 by selecting control actions. The environment responds to a control action with a certain state and the agent earns a reward depending on the state (and thus the action it has selected). The RL algorithm 202 may for example include learning a state-action value function Q.

This iterative process usually takes a long time to reach an optimal policy, even more so when the observation space size and the space of available actions are large. When it comes to learning an optimal control policy for a RAC system 100, this means that the users will face a long onboarding time during which they may experience discomfort as the RL algorithm 202 explores all sort of actions to increase its reward. This is a limitation of this family of algorithms.

According to various embodiments, approaches are described to make the RL learning of a control policy more efficient.

More specifically, according to various embodiments, an RL training method for a control policy for a RAC system (e.g. residential HVAC system) is provided which is based on federated learning, which includes progressively refining the control policy to narrow down its application to each individual user (i.e. resident in the present context), once some predefined quality gates are passed. Along with this, a method to train - in parallel to the control policy - a thermal comfort model with a corresponding system to narrow down the scope of the model to each individual user is used. So, according to various embodiments, an efficient approach for RL learning of a control policy for a RAC system is provided based on:

1. A method to train a control policy (common for multiple users, i.e. a common control policy) is used to reduce training time, based on federated learning. Data from a (or possibly multiple) RAC system(s) 100 (e.g. of multiple houses) in the field is used for training a global common model (i.e. a common control policy). In this way, enough data can be gathered in a very short time (days if not hours) to reach a stable operation for a generalized control. This also reduces initial discomfort for the users, as the RL exploration task can be highly distributed over different units and over time with limited impact on the users' wellbeing.

2. A method to refine the common control policy to narrow down application in progressive steps. Starting from a global dataset (to train the common control policy), subsets can be created according to geographic location, RAC system model used and demographics. The common control policy may be used as pre-trained control policy for each data subset, i.e. can be transferred for further training on each data subset once the quality of the common control policy is deemed sufficient to create a set of separate control policies each of which can be refined for a respective data subset until a next quality target is met, and the process can then be iterated (i.e. multiple instances of control policies may be further refined in multiple hierarchy levels starting from the common control policy as highest level) until the data subsets (of low-level control policies) narrow down to each individual user. From there, control policies may even be further broken down to different daily use cases. In this way each user particular need can be addressed at the end of the process (with a respective control policy or even multiple control policies for different daily use cases) through a progressive improvement, while reducing training time and initial discomfort.

3. A method to train a common thermal comfort model (common for multiple users) based on a global comfort database and refine it for individual use (i.e. refine it to a thermal comfort model for individual users). The common thermal comfort model can be further trained with input from the users as they are grouped down by regions, model, and demographics. Input from the users consists in collecting their changes to their RAC (sub-)system or unit (via phone app or remote controller). By comparing the RAC status before and after the user change, an indication of the user's thermal comfort feedback can be obtained (cold or hot) and this can be used to retrain the comfort model for this specific subset of users. The process can then be iterated until a personal thermal comfort model is available for each user. The thermal comfort models at each level (global, region etc..) are also fed to the RL training of the control policy (at any level of the hierarchy of control policies) to be part of the reward definition.

In the following, the above items 1 to 3 are described in more detail.

Regarding federated learning of a common control policy (item 1 above), it should be noted that RAC units 104 that are sold in the field are typically standardized products, which may change only in nominal capacity and size for the same model. This means that the system data points from internal sensors are the same, as well as the available basic functions such as changing temperature set point and fan speed. By virtue of these similarities, it is possible to train a single, global control policy for all of these RAC units 104. This can highly speed up training, as the RL training iterations can be distributed to all of these RAC units 104, each one contributing to the improvement of the same (common) control policy.

The common control policy may for example be trained using RL as follows. Firstly, a global (i.e. common) reward function is defined. This can include a target for energy consumption reduction, a target for room temperature, a target for thermal comfort, or a combination of these. One example is given by the following formula, but many others are possible:

$$R = e^{-(T_{target} - T_{room})^2} * (1 - Pow_{tot}/Pow_{tot,max})$$

With this reward, as the room temperature T deviates too much from the target, reward nears zero. At the same time, if power consumption increases toward the maximum value, reward also nears zero.

As next step, the observation space is defined. This can be the full set of common data that is collected by a RAC system 100, or a subset of it. Finally, the control action space is defined. This is a collection of all the possible types of control actions that can be performed on a RAC system 100, along with the available choices as illustrated in table 1 (a control action may include multiple action components and a value for each).

Table 1

| Action component | Possible action component values |
|---|---|
| Set temperature set point | 18, 19, 20, ..., 30 |
| Set fan speed | 1, 2, ...,7 |
| Set operating mode | 1, 2, ..., 5 |

During federated learning, a dispatching algorithm e.g. carried out by the server 106, chooses which of the RAC units 104 available performs a respective training step. The choice may be for a single RAC 104 or multiple RACs 104, and it can be completely randomized, or it can be based on the time passed since the last performed training step, so that discomfort for the users can be minimized with a less intrusive approach. For the selected RAC unit(s) 104, the RL algorithm 202 (e.g. carried out on the server 106) chooses the action to perform on each one. The action is then communicated to each selected RAC 104 and executed. The RL algorithm 202 gathers the resulting RAC data (acquired by the respective sensors 107) and uses this data to compute and accumulate the reward. Accumulation can be done based on different time frames, such as but not limited to 5 mins, 10 min or 1 hour for example. With the calculated reward the RL algorithm 202 updates the control policy according to the specific RL algorithm 202 used, such Deep Q learning, Deep Deterministic Policy Gradient, or others. As each RAC training step returns its own update, the training device (e.g. server 106) may merge or average the updates of all steps (and thus e.g. from all RAC units 104) or averaged to return a final update of the common control policy for a current iteration, and can iterate this process.

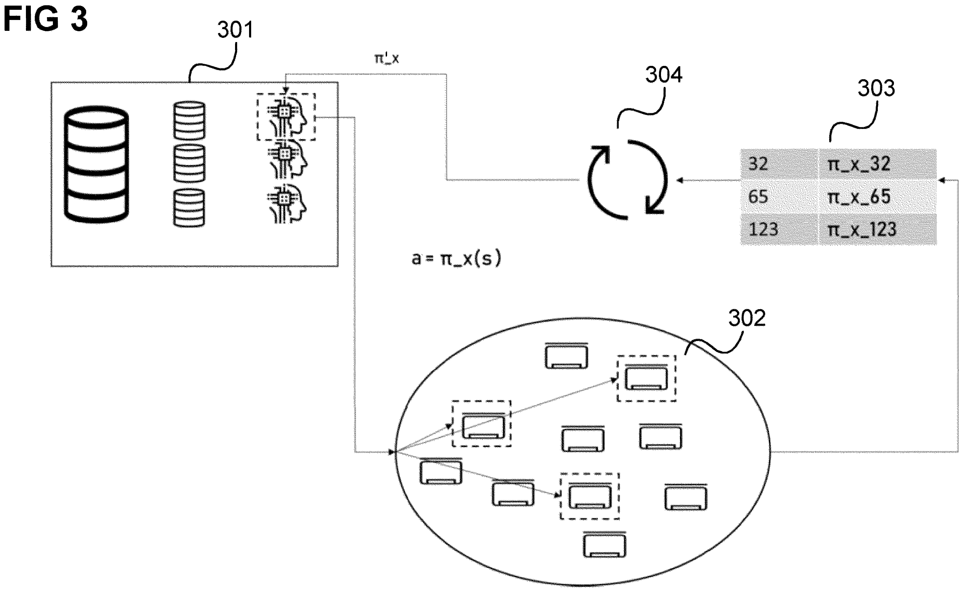

FIG. 3 illustrates federated learning of a control policy according to an embodiment.

As described above, a data processing device (or system) 301 which hosts the control policy, e.g. the server 106 initiates trainings steps by dispatching actions (which it may select according to the current version of the control policy) to RAC units 302. This results in a set of updates 303 (identified e.g. by a RAC ID or RAC group ID) which are merged in 304 and used to update the control policy. It should be noted that the updates may be determined by the data processing device 301 or (e.g. decentralized) additional data processing devices. Similarly, the merging may be done by the data processing device 301 or another data processing device (which for example sends the resulting control policy update to the data processing device 301).

Regarding progressive model refinement (item 2 above), the trained common control policy may, as described above be further refined so to address the specific needs of each RAC user.

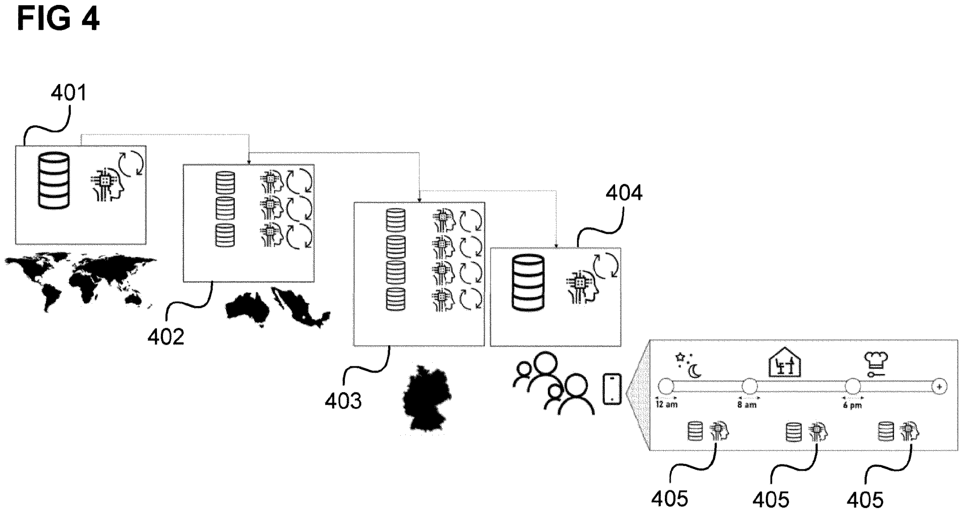

FIG. 4 illustrates the refinement of a common control policy over multiple refinement (hierarchy) levels 402, 403 to a personal control policy 404 and then possibly even to multiple control policies 405 for different times of the day or activities of the user. Accordingly, the training data used in the various levels 401-405 is progressively broken down into smaller training data sets to train more specific policies.

The refinement can happen in progressive steps using transfer learning and clustering RAC units according to some grouping criteria (e.g. per country, per city, per user type etc.).

A refinement step of a control policy (of a certain level 401-404) is for example only started (by a respective training device or system, e.g. server 106 or a decentralized training device associated with a subset of the RAC units 104) only when the control policy has reached a satisfactory quality level. This can be measured by looking at the relative change in the RL algorithm loss function during training or the relative change in the average cumulative rewards for the RAC system. Once this change is below a predefined threshold (0.1% for example), the next refinement can start. As mentioned above, the RAC units may for a refinement be grouped according to a grouping criterion, e.g. a location-based grouping criterion such as based on continent, country, region, city, or district. Each of these may also be used as grouping criteria for successive refinement steps.

Once the RAC units 105 are grouped, a set of (refined) control policies can now be trained, one for each group. The process followed is the same as for the common control policy, where some RAC units 105, this time in each group, are selected to perform the training step as described with reference to FIG. 3. In the end however, the update of the common control policy for each group results in a new separate policy that will be saved for each group, until a satisfactory level is again reached. This refinement is then repeated for successively smaller groups, with more policies generated, until the refinement can be performed for a single user. By this time, very little exploration will be needed, as the respective control policies would already be nearly optimal, and this results in less discomfort for the user and a more robust control.

This refinement may also be done based on other grouping criteria, such as model type, size, and user demographics (age, gender). Alternatively, these criteria may also be mixed during refinement; for example, location based refinement can be done up until the city level grouping, after which grouping may be done by model or by age or gender group (the data lake may include corresponding information about age and gender of users as well as about RAC unit models (e.g. size and location)).

Once the refinement has reached the control policies 404 of the individual user level, last step of refinement may include a set of different use cases (i.e. activity periods) that the user has throughout the day (e.g. sleep time, home office, social activities) for which, as mentioned above, again separate control policies 405 can be trained.

The refinement of thermal comfort model (item 3 above) may be trained by following a similar approach as for the (user-level) control policies 404. The thermal comfort model (or profile) takes the form of a function which can receive as input several parameters such as air temperature, mean radiant temperature, humidity, air speed, clothing level and metabolic rate and returns a predicted mean vote (PMV), a measure of the person's thermal comfort, e.g. in a seven point scale going from -3 (very cold) to +3 (very hot). For the thermal comfort model to be accurate enough, large amount of training data should be available, and it would have to cover enough of the thermal conditions to allow for an accurate representation of the seven PMV points by the model.

Additionally, users would have to provide frequent direct comfort feedback to a system in order to "label" the current thermal conditions and build the training dataset. This may result in annoyance in the user and there would not be any guarantee of having a sufficiently good model available. This in turn would complicate the learning process of the RL algorithm, which may use the calculated PMV as part of its reward function. To address this issue, a hierarchical training approach (including successive refinements) as for the user-level control policies 404 may be used where initially a common (e.g. global) thermal comfort model is trained which is then further refined.

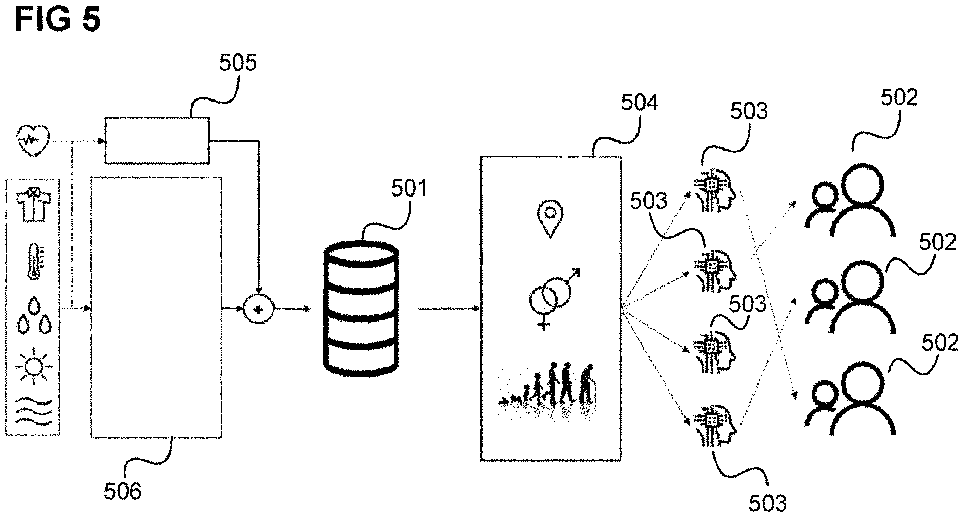

FIG. 5 illustrates thermal comfort model training.

According to the hierarchical training approach, initially a common (e.g. global) thermal comfort model is trained using available public data from a data base 501 collecting comfort feedback from a variety of people in terms of location, age, gender and type of building where the feedback was given (wherein the comfort level of the user for example depends on the user's body heat production 505 in combination with various factors of (user-specific) heat loss 506 such as sweating, skin diffusion, respiration, convection and radiation). An example of the data base 501 is the ASHRAE Global Thermal Comfort Database. The common thermal comfort model may be trained using the data points that are also available in the RAC observation dataset for effective integration.

Alternatively (and illustrated in FIG. 3), if data about users 502 is available such as location, age, gender, a specific model 503 can be first trained by filtering the content of the database 501 accordingly. Filter criteria 504 may for example include location, gender and age.

The common thermal comfort model or the user-group specific thermal comfort models thus trained may be refined (similarly as in the approach described with reference to FIG. 4) to arrive at a thermal comfort model for each RAC user by generating a user specific thermal comfort training dataset for the user.

A user specific thermal comfort training dataset is for example generated as follows: first, a historical record of observations is collected from the RAC system. The span of the historical record may be of one hour, one day or one week for example. This data is filtered to identify times when the user performed a change to the RAC system (e.g. changing set point, fan speed), which was not caused by a RL algorithm training step. By looking at the direction of the change, the thermal comfort of the user can be estimated. For example, if a change of temperature setpoint from a lower to a higher value is found, it means the user expressed a "cold" feedback, and vice versa for a warm feedback. Alternatively, if an increase in fan speed is observed, it means the user expressed a "warm" feedback.

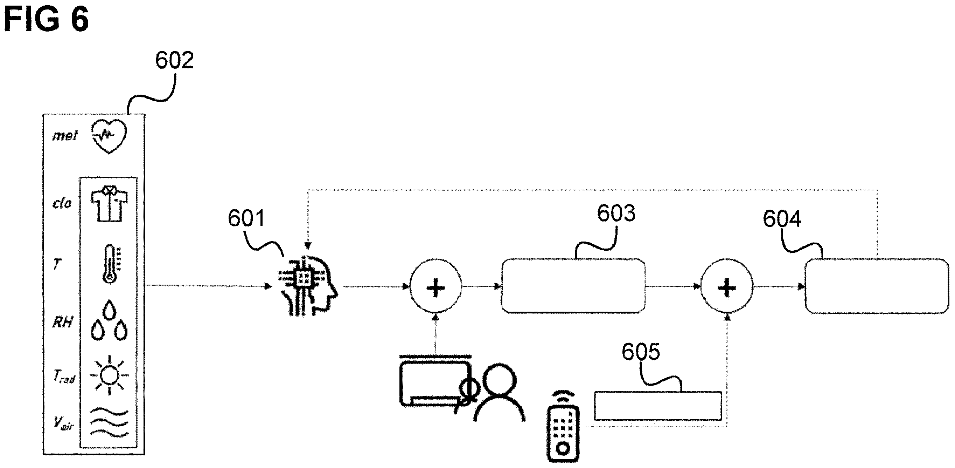

FIG. 6 illustrates a process for training a user-specific thermal comfort model. In the example of FIG. 6, it is assumed that the starting point is a user-group specific thermal comfort model 602, in the following referred to as "original" (or general) model (which may correspond to one of the models 503 of FIG. 5). Starting from original model 602, an estimated PMV 603 is updated to an updated PMV 604 by looking at user input 605 and translating it into a PMV change. Updated data is used to re-train model to fit user preferences.

For this, firstly the original model 602 (or, if already some training was done, the current version of the model 601) is used to predict the PMV at the time of the change (i.e. time of user feedback 605), i.e. to determine the PMV estimate 603. Then, based on the change direction of the user change 605, this estimated PMV 603 can be reduced or increased accordingly to arrive at the updated PMV 604. Increment may be of 0.1, 0.5 or 1 point for example. The updated PMV value 604 is then stored along with the corresponding observation to add on to the thermal comfort dataset for the particular user. Table 2 shows an example of the information stored.

Table 2

| Control | Before | After | $\Delta$PMV |
| --- | --- | --- | --- |
| T-set | 23 | 24 | -0.5 |
| Fan | 5 | 7 | +0.5 |
| Mode | Cool | Fan | -1 |

Finally this dataset can be used to update the current version of the model 601 (starting from the original model 602). This update process can be iterated periodically (every hour, day, week) using the latest available version of the model 601 and updating the PMV estimate 603 based on the user respective action (i.e. change initiated by the user) to eventually arrive at the trained user-specific thermal comfort model 601.

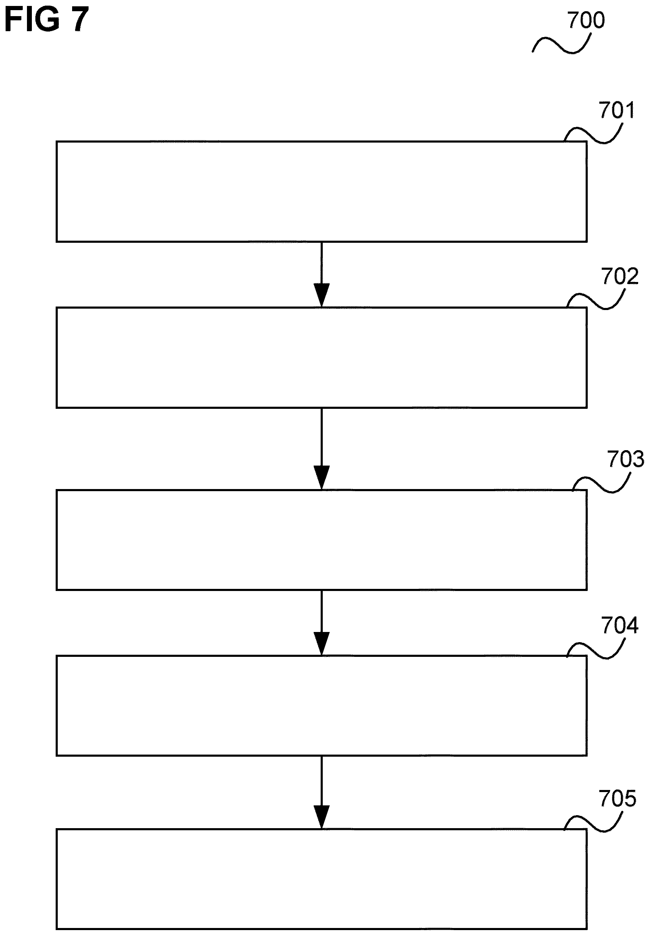

In summary, according to various embodiments, a method is provided as illustrated in FIG. 7.

FIG. 7 shows a flow diagram 700 illustrating a method for training a control strategy for a heating, ventilation, and air-conditioning (HVAC) system.

In 701, control actions are applied to a set of HVAC units comprising a plurality of HVAC units.

In 702 feedback is gathered from each HVAC unit of the set of HVAC units regarding results of the control actions.

In 703, a first HVAC control strategy is trained using reinforcement learning, wherein rewards are at least partially determined based on the feedback.

In 704 the set of HVAC units is sub-divided into different sub-sets of HVAC units and, in 705, for each sub-set, the first HVAC control strategy is refined to a respective second HVAC control strategy for the sub-set using reinforcement learning, wherein rewards are at least partially determined based on the feedback gathered for HVAC units of the sub-set.

According to various embodiments, in other words, a control strategy for a HVAC system is trained in a hierarchical manner, i.e. a first (common) control strategy is trained for a plurality of HVAC units (e.g. a plurality of HVAC systems) and this is then refined to smaller sub-sets (e.g. individual HVAC systems) or even further (e.g. until individual users or even individual user activities (e.g. defined by times of the day)).

The feedback may include user feedback. Thus, instead of (only) focusing on energy savings and on reaching some pre-defined temperature and humidity targets, the user perspective is taken into account. For example, as described above real thermal comfort information, such as Predicted Mean Vote (PMV) according to ASHRAE may be used as part of RL training and control, e.g. to help address the different user needs throughout a day.

As explained above, in parallel to the control strategy, a thermal comfort model (also referred to as user comfort model) may be trained, e.g. using a similar hierarchical approach (i.e. training a first thermal comfort model which is then refined in one or more hierarchy models).

It should be noted that while the term HVAC generally covers all three functions (heating, ventilation and air conditioning), it not should be note that not all HVAC systems perform all of these functions and the term is therefore used more broadly to encompass different combinations of heating, ventilation, and air conditioning. For example, some HVAC systems may only provide heating and air conditioning, while others may only provide ventilation and air conditioning. Additionally, there are systems that only provide heating or cooling, without any ventilation. As in the examples above, the HVAC system is for example a RAC system.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

**Claims**

1. A method for training a control strategy for a heating, ventilation, and air-conditioning, HVAC, system, comprising

   Applying control actions to a set of HVAC units comprising a plurality of HVAC units;
   Gathering feedback from each HVAC unit of the set of HVAC units regarding results of the control actions;
   Training a first HVAC control strategy using reinforcement learning, wherein rewards are at least partially determined based on the feedback; and
   Sub-dividing the set of HVAC units into different sub-sets of HVAC units and, for each sub-set;
   Refining the first HVAC control strategy to a respective second HVAC control strategy for the sub-set using reinforcement learning, wherein rewards are at least partially determined based on the feedback gathered for HVAC units of the sub-set.

2. The method of claim 1, comprising training a hierarchy of HVAC control strategies starting from the first HVAC control strategy by, for each level of the hierarchy below the first HVAC control strategy, sub-dividing the set of HVAC units for which a HVAC control strategy of the previous level of the hierarchy was trained into different sub-sets of HVAC units and, for each sub-set, refining the HVAC control strategy of the previous level to a HVAC control strategy for the level of the hierarchy using reinforcement learning, wherein rewards are at least partially determined based on the feedback gathered for HVAC units of the sub-set.

3. The method of claim 2, wherein the sub-sets of the lowest level of the hierarchy each comprise a single user or a single activity period of a respective user.

4. The method of any one of claims 1 to 3, comprising applying, for each sub-set, further control actions to the HVAC units of the sub-set, gathering further feedback from each HVAC unit of the sub-set regarding results of the further control actions, wherein rewards for the refining are at least partially determined based on the further feedback

5. The method of any one of claims 1 to 4, wherein rewards for training of the first HVAC control strategy or for the refining are at least partially determined based on user feedback about user comfort regarding room temperature.

6. The method of claim 5, wherein the user feedback includes user feedback for each of a plurality of users which is, for each of the plurality of users, determined based on whether the user has applied a user control action to a HVAC unit of the user.

7. The method of claim 6, wherein the user control action is one or more of switching a heating on, switching a heating off, switching a fan on and switching a fan off.

8. The method of claim 6 or 7, wherein the user control action to the HVAC unit of the user gives a negative reward to a control action which is overruled by the user control action.

9. The method of any one of claims 1 to 8, comprising performing the training and the refining using federated learning comprising merging control strategy updates determined for different HVAC unit selections among the plurality of HVAC units.

10. The method of any one of claims 1 to 9, wherein rewards for training of the first HVAC control strategy or for the refining are at least partially determined based on output of a user comfort model trained to predict a user comfort depending on room temperature.

11. The method of claim 10, comprising training the user comfort model in parallel with the training of the first control strategy or the refinement or both.

12. A method for controlling a heating, ventilation, and air-conditioning, HVAC, system comprising training a control strategy according to any one of claims 1 to 11 and controlling a HVAC system according to the control strategy.

13. The method of claim 12, wherein controlling the HVAC system according to the control strategy comprises transferring the trained control strategy to the HVAC system.

14. A data processing system configured to perform a method of any one of claims 1 to 13.

15. A computer program comprising instructions which, when executed by a computer, makes the computer perform a method according to any one of claims 1 to 13.

16. A computer-readable medium comprising instructions which, when executed by a computer, makes the computer perform a method according to any one of claims 1 to 13.

**FIG 1**

EP 4 446 824 A1

# FIG 2

$$Q^{\pi}(s,a) = \mathbb{E}_{\pi}\left[\sum_{k=0}^{\infty} \gamma^k r_{t+k+1} \mid s_t = s, a_t = a\right]$$

# FIG 3

$$\pi'\_x$$

$$a = \pi\_x(s)$$

| 32 | $\pi\_x\_32$ |
| 65 | $\pi\_x\_65$ |
| 123 | $\pi\_x\_123$ |

EP 4 446 824 A1

FIG 4

**FIG 5**

FIG 6

# FIG 7

700

701

702

703

704

705

Europäisches Patentamt

European Patent Office

Office européen des brevets

# EUROPEAN SEARCH REPORT

Application Number

EP 23 16 7807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/242608 A1 (LAFTCHIEV EMIL [US] ET AL) 8 August 2019 (2019-08-08) * paragraphs [0011], [0017] – [0018], [0054] – [0066], [0071], [0135] * ----- | 1-16 | INV. G05B15/02 F24F11/63 |
| A | DENG ZHIPENG ET AL: "Reinforcement learning of occupant behavior model for cross-building transfer learning to various HVAC control systems", ENERGY, vol. 238, 1 May 2021 (2021-05-01), page 110860, XP093088006, AMSTERDAM, NL ISSN: 0378-7788, DOI: 10.1016/j.enbuild.2021.110860 Retrieved from the Internet: URL:https://pdf.sciencedirectassets.com/271089/1-s2.0-S0378778821X00059/1-s2.0-S0378778821001444/main.pdf?X-Amz-Security-Token=IQoJb3JpZ2luX2VjEBQaCXVzLWVhc3QtMSJIMEYCIQD6arH+UhDupFJodURGREtPOGIMVHmkPSbMT7PbsaKz9gIhAJ9SzlJMuhZETxLBwGB1RUd5nbomSBKhVQQB25SycQY9KrIFCB0QBRoMMDU5MDAzNTQ2ODYlIgz9JYYTsrxj6hMaE> * the whole document * ----- | 6-8 | |

| TECHNICAL FIELDS SEARCHED (IPC) |
|---|
| G05B F24F |

The present search report has been drawn up for all claims

| Place of search | Date of completion of the search | Examiner |
|---|---|---|
| The Hague | 3 October 2023 | Bassi, Luca |

EPO FORM 1503 03.82 (P04C01)

EP 4 446 824 A1

## ANNEX TO THE EUROPEAN SEARCH REPORT
## ON EUROPEAN PATENT APPLICATION NO.

EP 23 16 7807

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2023

| Patent document cited in search report | Publication date | Patent family member(s) | Publication date |
|---|---|---|---|
| US 2019242608 A1 | 08-08-2019 | CN 111684370 A | 18-09-2020 |
| | | EP 3750012 A1 | 16-12-2020 |
| | | JP 6925536 B2 | 25-08-2021 |
| | | JP 2021508118 A | 25-02-2021 |
| | | US 2019242608 A1 | 08-08-2019 |
| | | WO 2019150612 A1 | 08-08-2019 |

EPO FORM P0459

For more details about this annex : see Official Journal of the European Patent Office, No. 12/82